# EUROPÄISCHE PATENTSCHRIFT

(11) **EP 0 757 265 B1**
(45) Veröffentlichungstag und Bekanntmachung des Hinweises auf die Patenterteilung: **19.11.2003**
(21) Anmeldenummer: 96108963.8
(22) Anmeldetag: 04.06.1996
(51) Int. Cl.: G02B 6/44, C08L 77/00

(54) **Kunststoff-Ummantelung für Lichtwellenleiter**
Polymer sheath for optical waveguides
Revêtement polymère pour guides d'onde optique

(30) Priorität: 02.08.1995 DE 19528439
(43) Veröffentlichungstag der Anmeldung: 05.02.1997
(73) Patentinhaber: EMS-INVENTA AG, 8002 Zürich (CH)
(72) Erfinder: Hochuli, Martin, Dipl.-Ing., 7013 Domat/Ems (CH); Buehler, Friedrich, Dr.rer.nat.Dipl.-Chem., 7430 Thusis (CH); Dalla Torre, Hans, Dr. Phil., 7013 Domat/Ems (CH)
(74) Vertreter: Becker Kurig Straus

(56) Entgegenhaltungen:
- EP-A- 0 254 275
- WO-A-86/03329
- WO-A-88/09041
- DE-A- 2 428 637
- US-A- 4 740 055
- US-A- 5 262 461
- PATENT ABSTRACTS OF JAPAN Bd. 016, Nr. 138 (E-1186) 07 April 1992 & JP 03 297 011 A (HITACHI CABLE LTD) 27 Dezember 1991

## Beschreibung

Die Erfindung betrifft einen Lichtwellenleiter mit mindestens einer Lichtwellenader und mindestens einer schrumpfarmen, dimensionsstabilen Kunststoff-Ummantelung.

Bei dem Lichtwellenleiter kann es sich um eine sogenannte Kompaktader, um gefüllte Lichtwellenleiter oder um einen Lichtwellenleiter mit mehreren Adern, d.h. sogenannte Bündeladern, handeln. Die Kunststoff-Ummantelung ist mindestens einschichtig, d.h. es können auch weitere äussere Schichten vorgesehen sein.

Der Aufbau eines Lichtwellenleiters wird z B. in DE-A-24 28 637 beschrieben. Darin wird eine optische Übertragungsfaser, d. h. ein Lichtwellenleiter, mit einer thermoplastischen Kunstharz-Beschichtung von einzelnen Glas-Fasern als Lichtwellenadern beschrieben. Das Auftragen eines haftenden Überzugs auf die elementaren Glasfasern hat vor allem die (Verstärkungs-)Wirkung, so dass die an und für sich spröden und nur wenig biegsamen Glasfasern stark verbesserte mechanische Eigenschaften wie grosse Bruchdehnung und hohe Biegsamkeit erhalten. Als geeignete thermoplastische Harze für diesen haftenden Überzug werden unter anderem Polyamid 11, Polyamid 12 oder Polyphenylenoxid genannt. Für eine die Gesamtheit der zu einem Kabel zusammengefassten Fasern abdeckenden Schutzlage wird in DE-A-24 28 637 nur Polyvinylchlorid erwähnt.

In den Patent Abstracts of Japan, Bd. 16, Nr. 138 (E-1186) und JP-A-3 297 011 ist eine elektrische Leitung mit einer dünnen Kunststoffisolation beschrieben, die aus einer Mischung aus Polyamid (z. B. PA 12) und Polyphenylenoxid besteht. Diese Kunststoffbeschichtung wird durch ein Extrusionsverfahren auf den Draht aufgebracht. Weil das Polyphenylenoxid den spezifischen, elektrischen Durchgangswiderstand erhöht, kann die Isolationsschicht dünn ausgeführt werden, während die Abriebbeständigkeit des Materials nicht abnimmt.

Es ist bekannt, die Umhüllung von Lichtwellenleitern im Extrusionsverfahren mit teilkristallinen Werkstoffen wie z.B. Polybutylenterephthalat oder Polyamid 12 herzustellen. Der freie Raum zwischen Umhüllung und Lichtwellenleiter wird in der Regel mit einer gelartigen Masse ausgefüllt. Wegen des unterschiedlichen Ausdehnungskoeffizienten der Lichtwellenleiter und des teilkristallinen Ummantelungswerkstoffes muß der Lichtwellenleiter mit einer Überlänge in die Kunststoffumhüllung eingelegt werden. Dadurch ist eine kräftefreie Kompensation der unterschiedlichen thermischen Ausdehnungen der Lichtwellenleiter und der Kunststoffumhüllung möglich.

Die für diese Anwendung üblicherweise verwendeten teilkristallinen Kunststoffe Polybutylenterephthalat (PBT) oder Polyamid 12 schrumpfen aufgrund ihrer Nachkristallisationsneigung erheblich nach, was zu einer zu hohen Überlänge führen kann. Zudem weisen die oben genannten Materialien mit 1,3x10⁻⁴/K einen verhältnismässig hohen thermischen Ausdehnungskoeffizienten aus. Insbesondere wenn zwischen dem Lichtwellenleiter und der Umhüllung sehr wenig Zwischenraum besteht, was z.B. bei sogenannten Kompaktadern oder bei Bündeladern mit sehr vielen Lichtwellenleitern (hohe Packungsdichte) der Fall ist, ist eine kraftfreie Kompensation der unterschiedlichen thermischen Ausdehnungen nicht mehr gewährleistet.

Eine weitere Variante ist die zweischichtige Umhüllung. Die innere Schicht besteht hier aus einem amorphen Werkstoff, z.B. aus einem amorphen Polyamid und die Aussenschicht aus einem teilkristallinen Werkstoff. Wegen der nicht vorhandenen Nachkristallisationsneigung des amorphen Werkstoffes lassen sich damit ebenfalls schrumpfarme Lichtwellenleiterumhüllungen herstellen. Der Nachteil dieser Variante besteht jedoch in der erhöhten Spannungsrißempfindlichkeit amorpher Werkstoffe und der Notwendigkeit, daß zur Herstellung eine Ummantelungsanlage mit zwei Extrudern notwendig ist. Zudem ist die Herstellung sehr kleiner und dünnwandiger Umhüllungen äusserst schwierig zu bewerkstelligen.

Der Erfindung liegt die Aufgabe zugrunde, einen Lichtwellenleiter mit einem Kunststoff-Ummantelungsmaterial bereitzustellen, das sich schrumpfarm verarbeiten läßt, keine oder nur eine geringe Nachkristallisationsneigung aufweist, einen niedrigen thermischen Ausdehnungskoeffizienten hat und eine sehr gute Beständigkeit gegen Chemikalien aufweist.

Diese Aufgabe wird durch den Lichtwellenleiter gemäß Anspruch 1 gelöst.

In den Unteransprüchen sind vorteilhafte Ausführungsformen der Erfindung beschrieben.

Erfindungsgemäß wird daher ein Lichtwellenleiter mit mindestens einer Lichtwellenleiterader und einem Kunststoffmaterial zur Ummantelung bzw. Umhüllung bereitgestellt, bei dem als Kunststoffmaterial ein durch Extrusion aufgebrachtes Polymerblend eingesetzt wird, das mindestens 5 und höchstens 95 Gew.-Teile mindestens einer Komponente a) und mindestens 5 und höchstens 95 Gew.-Teile mindestens einer Komponente b) enthält, wobei Komponente a) ausgewählt ist aus der Gruppe Polyamid 12, Polyamid 11, Polyamid 1212, Polyamid 1012 und Gemischen davon, und die Komponente b) ausgewählt ist aus der Gruppe Polyphenylenoxid, Polyphenylensulfid und Gemischen davon.

In einer bevorzugten Ausführungsform enthält das Polymerblend 40 bis 60 Gew.-Teile der Komponente a) und 60 bis 40 Gew.-Teile der Komponente b). Dabei ist Polyamid 12 als Komponente a) besonders bevorzugt.

Es können weitere verarbeitungs- und herstellungsbedingte Zusätze (bis zu 5 Gew.-Teile), insbesondere UV-Stabilisatoren und/oder Gleitmittel in dem Blend enthalten sein. Die Summe der Komponenten ergänzt sich auf 100 Gewichtsteile.

Der Zug-E-Modul dieses Polymerblends liegt dabei bevorzugt im Bereich zwischen 700 N/mm² und etwa 3000 N/mm² (gemessen nach der ISO-Norm Nr. 527) und die Streckspannung zwischen ca. 20 N/mm² und 70 N/mm².

Bei dem vorgenannten Mischungsverhältnis von bevorzugt 40 bis 60 Gew.-Teilen Polyamid 12 und 60 bis 40 Gew.-Teilen Polyphenylenoxid im Polymerblend lassen sich besonders dimensionsstabile Lichtwellenleiterumhüllungen herstellen, die auch nach längerer Lagerung bei zum Beispiel 85°C und 85% rel. Feuchte weniger als 0,15% Schrumpf aufweisen und zwischen 23°C und 80°C einen thermischen Ausdehnungskoeffizienten kleiner 0,8 x 10⁻⁴/K haben. Dadurch sind auch bei sehr kleinen Lichtwellenleiterumhüllungen, z.B. sogenannten Kompaktadern mit 0,5 x 0,9 mm Durchmesser und bei grösseren Umhüllungen, z.B. sogenannten Bündeladern mit 2,0 x 3,0 mm Durchmesser, eine kräftefreie Kompensation unterschiedlicher thermischer Ausdehnungen und damit zusammenhängend minimale optische Verluste in einem großen Temperaturbereich gewährleistet.

Die gemäß der Erfindung gefundenen Materialmischungen und die daraus hergestellten Umhüllungen bzw. die kompletten Lichtleiter zeichnen sich weiter durch eine sehr gute, reinem Polyamid 12 ähnliche Chemikalienbeständigkeit, Alkoholbeständigkeit und Hydrolysebeständigkeit aus. Sie haben eine hohe Schlagzähigkeit, eine sehr gute Witterungsbeständigkeit und eine Wasseraufnahme (gesättigt) < 0,8 %. Ein weiterer Vorteil der erfindungsgemäßen Kunststoffmaterialien bzw. der Umhüllungen ist ihre Verarbeitungstemperatur von unter 300°C. Die gemäß dem Stand der Technik verwendeten Polyetherimide oder von Polyethersulfon müssen nämlich bei Temperaturen von 350°C bis 400°C verarbeitet werden.

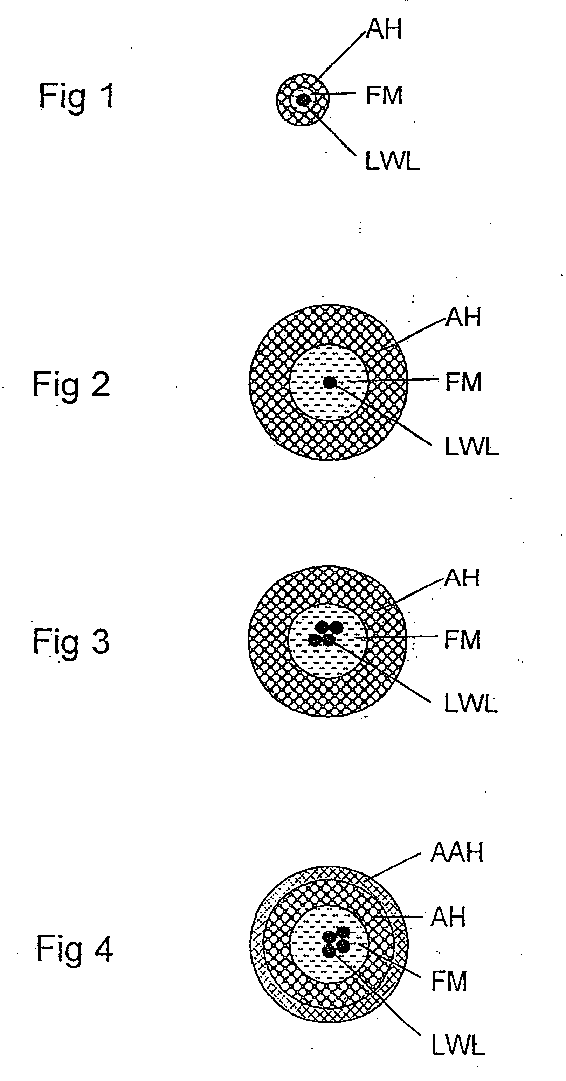

Das gemäß der Erfindung genannte Umhüllungsmaterial (AH) ist somit ideal geeignet zur Herstellung von sogenannten Kompaktadern (Figur 1), gefüllten Lichtwellenleitern (LWL)-Adern mit ein (Figur 2) oder mehreren Lichtwellenleitern, sogenannten Bündeladern (Figur 3). Als weitere Variante ist auch eine zweischichtige Umhüllung (Figur 4) denkbar, wobei in diesem Fall die äussere Schicht (AAH) aus einem Polyester, Polyether, Polyamid, Polyurethan, Polyethylen (MD, HD), Polyolefine, wie z.B. PP, oder Gemischen der vorgenannten Polymere hergestellt sein kann.

Zwischen der Umhüllung und dem Lichtwellenleiter bzw. der Lichtwellenader kann ein gelartiges Füllmaterial (FM), in der Regel basierend auf Mineral-, Synthetic- oder Silikonöl (z.B. Rheogel®220 oder Lunnectra®444), vorgesehen sein, das den Zwischenraum entweder vollständig oder auch nur teilweise ausfüllt.

## Patentansprüche

1. Lichtwellenleiter mit mindestens einer Lichtwellenader und einer den Lichtwellenleiter allseitig umschließenden losen Kunststoff-Ummantelung, die durch Extrusionsverfahren aufbringbar ist und mindestens einschichtig sowie schrumpfarm und dimensionsstabil ist, bei den die Ummantelung aus einem Kunststoffmaterial besteht, das eine Komponente a) enthält, wobei Komponente a) ausgewählt ist aus der Gruppe Polyamid 11, Polyamid 12, Polyamid 1212, Polyamid 1012 und Gemischen davon, **dadurch gekennzeichnet, dass** als Kunststoffmaterial für die Ummantelung ein Polymerblend verwendet wird, das 5 bis 95 Gew.-Teile mindestens einer Komponente a) und 95 bis 5 Gew.-Teile mindestens einer Komponente b) und gegebenenfalls weitere herstellungs- und/oder verwendungsbedingte Zusätze enthält, wobei Komponente b) ausgewählt ist aus der Gruppe Polyphenylenoxid, Polyphenylensulfid und Gemischen davon, wobei sich die Gewichtsteile der Komponenten des Polymerblends auf 100 ergänzen.

2. Lichtwellenleiter nach Anspruch 1, **dadurch gekennzeichnet, dass** das Polymerblend 40 bis 60 Gew.-Teile mindestens einer Komponente a) und 60 bis 40 Gew.-Teile mindestens einer Komponente b) enthält.

3. Lichtwellenleiter nach Anspruch 2, **dadurch gekennzeichnet, dass** das Polymerblend 40 bis 60 Gew.-Teile Polyamid 12 und 60 bis 40 Gew.-Teile Polyphenylenoxid oder Polyphenylensulfid enthält.

4. Lichtwellenleiter nach einem der vorhergehenden Ansprüche, **dadurch gekennzeichnet, dass** das für die Ummantelung verwendete Polymerblend einen Zug-E-Modul zwischen 700 N/mm² und 3000 N/mm² aufweist.

5. Lichtwellenleiter nach einem der vorhergehenden Ansprüche, **dadurch gekennzeichnet, dass** das für die Ummantelung verwendete Polymerblend eine Streckspannung zwischen 20 N/mm² und 70 N/mm² aufweist.

6. Lichtwellenleiter nach einem der vorhergehenden Ansprüche, **dadurch gekennzeichnet, dass** die Ummantelung eine weitere, äußere Schicht enthält, wobei die äußere Schicht aus einem Polymer aus der Gruppe Polyester, Polyether, Polyamid, Polyurethan, Polyethylen (MD, HD), Polyolefine, oder Gemischen der vorgenannten Polymere hergestellt sein kann.

7. Lichtwellenleiter nach einem der vorhergehenden Ansprüche, **dadurch gekennzeichnet, dass** im Kunststoff-Ummantelungsmaterial als herstellung- und/oder verwendungsbedingte Zusätze bis zu 5 Gew.-Teile UV-Stabilisatoren und/oder Gleitmittel enthalten sind.

8. Lichtwellenleiter nach einem der vorhergehenden Ansprüche, **dadurch gekennzeichnet, dass** zwischen der mindestens einschichtigen Ummantelung und dem mindestens einen Lichtwellenleiter eine Füllmasse vorgesehen ist, die den Zwischenraum wenigstens teilweise ausfüllt.

## Claims

1. Light-wave conductor having at least one light-wave core and a loose, plastics material covering enclosing the light-wave core on all sides, which covering is applicable by extrusion methods and has at least one layer as well as being low-shrinking and dimensionally stable, wherein the covering is formed from a plastics material which contains a component a), component a) being selected from the group including polyamide 11, polyamide 12, polyamide 1212, polyamide 1012 and mixtures thereof, **characterised in that**, as the plastics material for the covering, a polymer blend is used which contains between 5 and 95 parts by wt. of at least one component a) and between 95 and 5 parts by wt. of at least one component b) and possibly additional additives conditional on the production and/or the use, component b) being selected from the group including polyphenylene oxide, polyphenylene sulphide and mixtures thereof, the parts by weight of the components of the polymer blend totalling 100.

2. Light-wave conductor according to claim 1, **characterised in that** the polymer blend contains between 40 and 60 parts by wt. of at least one component a) and between 60 and 40 parts by wt. of at least one component b).

3. Light-wave conductor according to claim 2, **characterised in that** the polymer blend contains between 40 and 60 parts by wt. polyamide 12 and between 60 and 40 parts by wt. polyphenylene oxide or polyphenylene sulphide.

4. Light-wave conductor according to one of the preceding claims, **characterised in that** the polymer blend used for the covering has a modulus of elasticity in tension of between 700 N/mm² and 3000 N/mm².

5. Light-wave conductor according to one of the preceding claims, **characterised in that** the polymer blend used for the covering has a yield stress of between 20 N/mm² and 70 N/mm².

6. Light-wave conductor according to one of the preceding claims, **characterised in that** the covering contains an additional outer layer, the outer layer being able to be produced from a polymer selected from the group including polyester, polyether, polyamide, polyurethane, polyethylene (MD, HD), polyolefins or mixtures of the aforementioned polymers.

7. Light-wave conductor according to one of the preceding claims, **characterised in that** up to 5 parts by wt. UV stabilisers and/or parting compounds are contained in the plastics material covering material as additives conditional on the production and/or the use.

8. Light-wave conductor according to one of the preceding claims, **characterised in that** a filling material is provided between the at least single-layered covering and the at least one light-wave conductor and at least partially fills the intermediate space.

## Revendications

1. Guide d'ondes optiques comportant au moins un conducteur d'ondes optiques et une gaine en matière plastique enrobant sans le serrer le guide d'ondes optiques, qui est applicable par un procédé d'extrusion, la gaine étant au moins monocouche, faiblement rétractable et présentant une stabilité dimensionnelle, dans lequel la gaine est constituée d'un matériau à base de matières plastiques qui contient un composant a), le composant a) étant choisi dans l'ensemble constitué par le polyamide-11, le polyamide-12, le polyamide-1212, le polyamide-1012 et des mélanges de ceux-ci, **caractérisé en ce qu'**on utilise en tant que matériau à base de matières plastiques pour la gaine un alliage de polymères qui contient de 5 à 95 parties en poids d'au moins un composant a) et de 95 à 5 parties en poids d'au moins un composant b) et éventuellement d'autres additifs requis pour la fabrication et/ou l'utilisation, le composé b) étant choisi dans l'ensemble constitué par l'oxyde de polyphénylène, le sulfure de polyphénylène et des mélanges de ceux-ci, les parties en poids des composants de l'alliage de polymères se complétant à 100.

2. Guide d'ondes optiques selon la revendication 1, **caractérisé en ce que** l'alliage de polymères contient de 40 à 60 parties en poids d'au moins un composant a) et de 60 à 40 parties en poids d'au moins un composant b).

3. Guide d'ondes optiques selon la revendication 2, **caractérisé en ce que** l'alliage de polymères contient de 40 à 60 parties en poids de polyamide-12 et de 60 à 40 parties en poids d'oxyde de polyphénylène ou de sulfure de polyphénylène.

4. Guide d'ondes optiques selon l'une quelconque des revendications précédentes, **caractérisé en ce que** l'alliage de polymères utilisé pour la gaine présente un module d'élasticité en traction compris entre 700 N/mm² et 3 000 N/mm².

5. Guide d'ondes optiques selon l'une quelconque des revendications précédentes, **caractérisé en ce que** l'alliage de polymères utilisé pour la gaine présente une tension d'étirage comprise entre 20 N/mm² et 70 N/mm².

6. Guide d'ondes optiques selon l'une quelconque des revendications précédentes, **caractérisé en ce que** la gaine comporte une couche externe, la couche externe pouvant être produite à partir d'un polymère choisi dans l'ensemble constitué par un polyester, un polyéther, un polyamide, un polyuréthanne, un polyéthylène (MD, HD), des polyoléfines et des mélanges des polymères précités.

7. Guide d'ondes optiques selon l'une quelconque des revendications précédentes, **caractérisé en ce que** dans le matériau à base de matières plastiques de la gaine sont contenus, en tant qu'additifs requis pour la fabrication et/ou l'utilisation, jusqu'à 5 parties en poids de stabilisants UV et/ou de lubrifiants.

8. Guide d'ondes optiques selon l'une quelconque des revendications précédentes, **caractérisé en ce qu'**il est prévu une matière de remplissage, qui remplit au moins en partie l'espace intermédiaire entre la gaine au moins monocouche et au moins un guide d'ondes optiques.
